# EUROPÄISCHE PATENTSCHRIFT

(11) **EP 1 178 252 B1**
(45) Veröffentlichungstag und Bekanntmachung des Hinweises auf die Patenterteilung: **18.10.2006**
(21) Anmeldenummer: 01117820.9
(22) Anmeldetag: 21.07.2001
(51) Int. Cl.: F16L 13/11, F16L 13/12, F16L 25/00, F16L 13/10

(54) **Anschlussverbindung für gewellte Rohrleitungen aus Metall**
Connection device for corrugated metal pipes
Dispositif de raccordement pour tuyaux ondulés en métal

(30) Priorität: 04.08.2000 DE 10038153
(43) Veröffentlichungstag der Anmeldung: 06.02.2002
(73) Patentinhaber: Witzenmann GmbH, 75175 Pforzheim (DE)
(72) Erfinder: Rieth, Rüdiger, 75172 Pforzheim (DE); Müller, Axel, 75177 Pforzheim (DE); Thüringer, Nobert, 75233 Tiefenbronn (DE)
(74) Vertreter: Blumenröhr, Dietrich

(56) Entgegenhaltungen:
- GB-A- 1 046 041
- US-A- 4 196 923
- US-A- 4 371 199
- US-A- 5 720 504

## Beschreibung

Die Erfindung betrifft ein Verfahren zur Anschlussverbindung von gewellten Rohrleitungen aus Metall, die mit kontinuierlichem Querschnitt als Meterware hergestellt sind, wobei die Anschlussverbindung ohne separate Muffe hergestellt wird.

Ein übliches Einsatzgebiet von gewellten Metall-Rohrleitungen besteht in deren Verwendung als Leer- bzw. Leitungsrohr, welches beispielsweise in Abwasserkanälen verlegt wird und zur Durchführung von Telekommunikationskabeln dient. Ein solcher Verwendungszweck macht es erforderlich, dass Rohrleitungen mit großer Länge zur Verfügung stehen, um möglichst wenig Verbindungsarbeiten vor Ort durchführen zu müssen. Eine geforderte Rohrleitungslänge liegt beispielsweise bei 1000 m. Eine solch große Länge ist aber in der Regel nicht problemlos in einem Arbeitsgang zu erreichen: Zum einen ist ein störungsfreies kontinuierliches Verschweißen des Metallbandes zur Herstellung der Rohrleitung mittels einer Längsnaht über eine Länge von 1000 m nicht immer möglich und zum anderen beträgt eine jeweils zur Verfügung stehende Restlänge des zu verwendenden Metallbandes nicht immer die mindestens erforderlichen 1000 m.

Aus der GB-A 1 046 041 ist bereits ein Verfahren zur Verbindung zweier gewellter Rohrleitungen bekannt, wobei diese beiden Rohrleitungen jedoch unterschiedliche Durchmesser aufweisen, sodass sie mit ihren Enden ineinander gesteckt werden können, wobei vor dem Ineinanderstecken ein sich ausdehnendes Kunststoffmaterial zwischen die beiden Enden eingefügt wird und wobei die beiden Rohrleitungen nach dem Ausdehnen und Aushärten des Kunststoffmaterials fest miteinander verbunden sind.

Hiervon ausgehend besteht ein Bedarf dafür, gewellte Rohrleitungen mit gleichem Durchmesser so aneinander anschließen zu können, dass zum einen der lichte Innenquerschnitt im Bereich der Anschlussstelle nicht reduziert wird bei gleichzeitiger allenfalls geringfügiger Abänderung des Außendurchmessers und dass zum anderen die Anschlussverbindung trotz großer Belastbarkeit baustellengeeignet ist, also ohne größeren Aufwand vor Ort hergestellt werden kann.

Diese Aufgabe wird erfindungsgemäß dadurch gelöst, dass die Anschlussverbindung ohne separate Muffe dadurch hergestellt ist, dass die miteinander zu verbindenden Enden zweier Rohrleitungen auf eine glattzylindrische Form gebracht sind, dass eines der beiden Enden gegenüber dem anderen zylindrischen Ende aufgeweitet ist, dass beide Enden ineinandergesteckt sind, und dass die gegenseitige Fixierung über eine die ineinander gesteckten Enden beaufschlagende stoff- oder formschlüssige Verbindung erfolgt. Am einfachsten wird hierbei die Verbindung durch einen Klebstoff hergestellt. Ebenso sind aber auch Lötverbindungen, Schweißverbindungen (insbesondere Orbitalschweißverbindung) neben einem Formschluss möglich.

Zunächst einmal ist ein wesentlicher Aspekt der vorliegenden Erfindung darin zu sehen, dass keine separate Muffe verwendet werden muss, die die beiden Anschlussenden miteinander verbinden würde. Dies trägt schon einmal wesentlich dazu bei, dass sich der Außendurchmesser im Bereich der Anschlussverbindung nicht wesentlich ändert. Nachteilig an solchen Muffen, die im Stand der Technik weit verbreitet sind und auf die Wendelwellung der Rohrleitungsenden aufgeschraubt wird, ist auch der relativ große Montageaufwand verglichen mit dem einfachen Ineinanderstecken glattzylindrischer Rohrleitungsenden, wie es beim vorliegenden Erfindungsgegenstand der Fall ist. Dadurch dass die Rohrleitungsenden vor dem Ineinanderstecken geglättet werden, steht auch der gesamte Bereich der Profilhöhe der Rohrleitungswellung zur gegenseitigen Festlegung der Anschlussenden zur Verfügung. Somit muss tatsächlich der lichte Innenquerschnitt der gewellten Rohrleitungen nicht unterschritten werden. Ebenso wird auch der Außendurchmesser nicht wesentlich überschritten.

Für den zuvor beschriebenen Einsatzzweck muss die Anschlussverbindung eine gewisse Zugfestigkeit, Dichtigkeit, Druckbeständigkeit, Vibrationsfestigkeit, Scheitelbelastbarkeit, Korrosionsbeständigkeit und elektrische Leitfähigkeit aufweisen. All diese Anforderungen können durch die vorliegende erfindungsgemäße Anschlussverbindung gewährleistet werden, bei der die gegenseitige Fixierung mittels Klebstoff erfolgt. Um jedoch den Klebstoff in seiner Haltefunktion zu unterstützen, ist es besonders vorteilhaft, wenn die Anschlussverbindung im Bereich der sich überlappenden glattzylindrischen Enden eine umlaufende sickenförmige Vertiefung aufweist. Denn aufgrund einer gegenseitigen formschlüssigen Verbindung wird die Klebung etwas in ihrer Funktion unterstützt bzw. entlastet. Diese sickenförmige Vertiefung kann beispielsweise durch Verwendung eines Rollierwerkzeuges mit definierter Tiefe eingeprägt werden, wobei sich insbesondere zur besseren Lastverteilung zwei Sicken empfehlen.

Entsprechend der wesentlichen Anforderung an die Anschlussverbindung muss also der Innenquerschnitt der Anschlussverbindung gleich oder größer dem lichten Innenquerschnitt der beiden Rohrleitungen sein, um den in den Rohrleitungen zu verlegenden Leitungen ausreichend Platz zu bieten. Mit anderen Worten werden die glattzylindrischen Enden beim Glättvorgang bezüglich ihres Innendurchmessers verglichen mit dem ursprünglichen lichten Innendurchmesser aufgeweitet. Und auch die Sicke soll sich nicht weiter nach innen erstrecken als der lichte Innendurchmesser der wendelgewellten Rohrleitung.

Beim Aufweiten des einen Rohrleitungsendes gegenüber dem anderen Ende ist lediglich ein Innendurchmesser anzustreben, der geringfügig größer als der Außendurchmesser des genannten anderen Endes ist, um das Ineinanderstecken zu ermöglichen und ausreichend Platz für den zwischen die beiden ineinandergesteckten Enden einzubringenden Klebstoff zu lassen.

Was den Montagevorgang betrifft, so ist es zur Verbesserung der Haftung des Klebstoffes an den Rohrleitungsenden empfehlenswert, diese glattzylindrischen Enden vor dem Aufbringen des Klebstoffes aufzurauhen. Außerdem wird zur Vergrößerung der Dichtigkeit vorgeschlagen, die Anschlussverbindung nach dem Ineinanderstecken der beiden Enden der Rohrleitungen von außen mit zusätzlichem Klebstoff zu beaufschlagen, der die verbleibende Fuge zwischen dem Rohrleitungsende mit größerem Durchmesser und dem Rohrleitungsende mit kleinerem Durchmesser abdichtet.

Zwar ist die vorliegende Erfindung auch für ringgewellte Rohrleitungen geeignet. Der Hauptanwendungsfall wird sich jedoch auf die eingangs beschriebenen wendelgewellten Profilrohre (sowohl rechts- als auch linkssteigend) beziehen, die in dieser Länge doch mit einfacherem Aufwand kontinuierlich herstellbar sind.

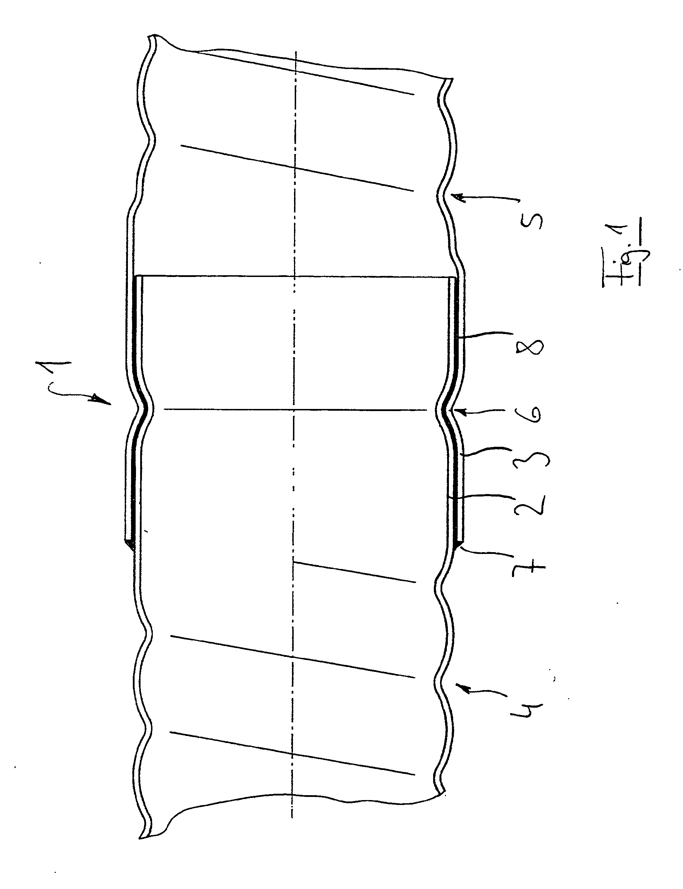

Weitere Merkmale und Vorteile der vorliegenden Erfindung ergeben sich aus den weiteren Unteransprüchen und der nachfolgenden Beschreibung eines Ausführungsbeispiels anhand der Zeichnung (Figur 1), die eine erfindungsgemäß hergestellte Anschlussverbindung 1 in geschnittener Seitenansicht zeigt. In dieser Anschlussverbindung sind zwei Enden 2, 3 wendelgewellter Rohrleitungen 4, 5 aneinander festgelegt, wobei sich die beiden Anschlussenden in einem glattzylindrischen Bereich überlappen. Diese glattzylindrischen Bereiche sind aus der kontinuierlichen Meterware der Rohrleitungen durch Glätten hergestellt, wobei eines der beiden Enden (im Ausführungsbeispiel aus Figur 1 das Ende 3 der Rohrleitung 5) etwas gegenüber dem anderen Ende aufgeweitet ist, um das Einstecken des anderen Endes (in Figur 1 von Ende 2 der Rohrleitung 4) zu ermöglichen.

Vor dem Ineinanderstecken werden die glattzylindrischen Bereiche entgratet, angerauht, gereinigt und mit Klebstoff 8 bestrichen, der den Kraftschluss zwischen den beiden Rohrleitungen herstellt. Nach dem Ineinanderstecken wird mittels eines Rollierwerkzeugs eine umlaufende sickenförmige Vertiefung 6 eingeprägt, um die beiden glattzylindrischen Bereiche auch formschlüssig aneinander festzulegen. Schließlich wird durch Aufbringen eines weiteren Klebstoffs 7, der auch aus anderem Material als der Klebstoff 8 bestehen kann, im Endbereich des Rohrleitungsendes mit größerem Querschnitt die verbliebene Fuge gegenüber dem innenliegenden Ende 2 abgedichtet.

Zusammenfassend wird durch die vorliegende Erfindung eine Anschlussverbindung für gewellte Rohrleitungen zur Verfügung gestellt, die einfach herstellbar ist und insbesondere weder auf ihrer Außenseite noch auf ihrer Innenseite wesentlich aufträgt, wodurch sie zum einen Einbauraum einspart und zum anderen auch den inneren Durchleitungsquerschnitt nicht beeinträchtigt. Durch die erfindungsgemäß hergestellte Anschlussverbindung lassen sich zwei oder mehrere gewellte Rohrleitungen zu endlosen Längen verbinden. Eine solche Länge ist bei kontinuierlich gefertigten Rohrleitungen in einem lücken- bzw. verbindungslosen Arbeitsgang derzeit nicht erhältlich.

## Patentansprüche

1. Verfahren zur Anschlussverbindung von gewellten Rohrleitungen aus Metall, die mit kontinuierlichem Querschnitt als Meterware hergestellt sind, wobei die Anschlussverbindung (1) ohne separate Muffe **dadurch** hergestellt wird,
**dadurch gekennzeichnet,**
**dass** miteinander zu verbindende Enden (2, 3) zweier Rohrleitungen (4, 5) auf eine glattzylindrische Form gebracht werden, dass eines (3) der beiden Enden gegenüber dem anderen (2) zylindrischen Ende aufgeweitet wird, dass beide Enden ineinandergesteckt werden, und dass die gegenseitige Fixierung über eine stoff- oder formschlüssige Verbindung (8) erfolgt.

2. Verfahren zur Anschlussverbindung nach Anspruch 1,
**dadurch gekennzeichnet,**
**dass** die gegenseitige Fixierung über eine Klebverbindung (8) erfolgt.

3. Verfahren zur Anschlussverbindung nach zumindest einem der vorstehenden Ansprüche,
**dadurch gekennzeichnet,**
**dass** in die Anschlussverbindung (1) im Bereich der sich überlappenden glattzylindrischen Enden (2, 3) eine oder mehrere umlaufende sickenförmige Vertiefungen (6) eingebracht werden.

4. Verfahren zur Anschlussverbindung nach zumindest einem der vorstehenden Ansprüche,
**dadurch gekennzeichnet,**
**dass** der Innenquerschnitt der Anschlussverbindung (1) gleich oder größer dem lichten Innenquerschnitt der beiden Rohrleitungen (4, 5) ist.

5. Verfahren zur Anschlussverbindung nach zumindest einem der vorstehenden Ansprüche,
**dadurch gekennzeichnet,**
**dass** die glattzylindrischen Enden (2, 3) beider Rohrleitungen (4, 5) einen größeren Innendurchmesser aufweisen als der lichte Innendurchmesser der beiden Rohrleitungen in ihrem gewellten Bereich.

6. Verfahren zur Anschlussverbindung nach Anspruch 3,
**dadurch gekennzeichnet,**
**dass** im Bereich der sickenförmigen Vertiefung (6) der Innenquerschnitt der Anschlussverbindung (1) gleich oder größer dem lichten Innenquerschnitt der beiden Rohrleitungen (4, 5) in ihrem gewellten Bereich ist.

7. Verfahren zur Anschlussverbindung nach zumindest einem der vorstehenden Ansprüche,
**dadurch gekennzeichnet,**
**dass** die glattzylindrischen Enden (2, 3) der Rohrleitungen (4, 5) vor dem Aufbringen des Klebstoffes (8) aufgerauht werden.

8. Verfahren zur Anschlussverbindung nach zumindest einem der vorstehenden Ansprüche,
**dadurch gekennzeichnet,**
**dass** die Anschlussverbindung (1) nach dem Ineinanderstecken der beiden Enden (2, 3) der Rohrleitungen (4, 5) von außen mit zusätzlichem Klebstoff (7) beaufschlagt wird.

9. Verfahren zur Anschlussverbindung nach zumindest einem der vorstehenden Ansprüche,
**dadurch gekennzeichnet,**
**dass** die Enden (2, 3) der beiden Rohrleitungen (4, 5) vor der Herstellung der Anschlussverbindung (1) senkrecht zur Schlauchachse abgetrennt werden.

10. Verfahren zur Anschlussverbindung nach zumindest einem der vorstehenden Ansprüche,
**dadurch gekennzeichnet,**
**dass** die Rohrleitungen (4, 5) wendelgewellt sind.

11. Verfahren zur Anschlussverbindung nach zumindest einem der vorstehenden Ansprüche,
**dadurch gekennzeichnet,**
**dass** die Rohrleitungen ringgewellt sind.

## Claims

1. Method of joining corrugated metal pipes which have been produced with a continuous cross-section as goods sold by length, the joint (1) being produced without a separate sleeve,
**characterised in that**
the ends (2, 3) of two pipes (4, 5) that are to be joined together are given a plain-cylindrical shape; one (3) of the two ends is expanded relative to the other (2) cylindrical end; the two ends are inserted one inside the other; and mutual fixation is effected by means of a bonded or interlocked connection (8).

2. Joining method according to claim 1,
**characterised in that**
the mutual fixation is effected by means of an adhesive connection (8).

3. Joining method according to at least one of the preceding claims,
**characterised in that**
one or more circumferential crimp-like indentations (6) are made in the joint (1) in the region of the overlapping plain-cylindrical ends (2, 3).

4. Joining method according to at least one of the preceding claims,
**characterised in that**
the internal cross-section of the joint (1) is equal to or greater than the clear internal cross-section of the two pipes (4, 5).

5. Joining method according to at least one of the preceding claims,
**characterised in that**
the plain-cylindrical ends (2, 3) of the two pipes (4, 5) have a larger internal diameter than the clear internal diameter of the two pipes in their corrugated region.

6. Joining method according to claim 3,
**characterised in that**
in the region of the crimp-like indentation (6), the internal cross-section of the joint (1) is equal to or greater than the clear internal cross-section of the two pipes (4, 5) in their corrugated region.

7. Joining method according to at least one of the preceding claims,
**characterised in that**
prior to application of the adhesive (8), the plain-cylindrical ends (2, 3) of the pipes (4, 5) are surface-roughened.

8. Joining method according to at least one of the preceding claims,
**characterised in that**
after the two ends (2, 3) of the pipes (4, 5) have been inserted one inside the other, additional adhesive (7) is applied to the joint (1) from the outside.

9. Joining method according to at least one of the preceding claims,
**characterised in that**
the ends (2, 3) of the two pipes (4, 5) are cut off perpendicularly to the hose axis before the joint (1) is made.

10. Joining method according to at least one of the preceding claims,
**characterised in that**
the pipes (4, 5) are helically corrugated.

11. Joining method according to at least one of the preceding claims,
**characterised in that**
the pipes are annularly corrugated.

## Revendications

1. Procédé de raccordement de tuyaux ondulés en métal qui sont fabriqués avec une section continue sous forme de marchandise au mètre, le raccordement (1) étant ainsi réalisé sans manchon séparé,
**caractérisé en ce que** des extrémités (2, 3) à raccorder entre elles de deux tuyaux (4, 5) sont amenées sous une forme cylindrique lisse, **en ce qu'**une (3) des deux extrémités est élargie par rapport à l'autre extrémité cylindrique (2), **en ce que** les deux extrémités sont emboîtées l'une dans l'autre, et **en ce que** la fixation en position mutuelle s'effectue au moyen d'une liaison (8) positive ou de matière.

2. Procédé de raccordement selon la revendication 1, **caractérisé en ce que** la fixation en position mutuelle s'effectue au moyen d'une liaison par collage (8).

3. Procédé de raccordement selon au moins une des revendications précédentes, **caractérisé en ce qu'**un ou plusieurs renfoncements entourants (6) en forme de moulures sont pratiqués dans le raccordement (1) dans la région des extrémités cylindriques lisses (2, 3) qui se chevauchent.

4. Procédé de raccordement selon au moins une des revendications précédentes, **caractérisé en ce que** la section intérieure du raccordement (1) est supérieure ou égale à la section intérieure de passage des deux tuyaux (4, 5).

5. Procédé de raccordement selon au moins une des revendications précédentes, **caractérisé en ce que** les extrémités cylindriques lisses (2, 3) des deux tuyaux (4, 5) présentent un plus grand diamètre intérieur que le diamètre intérieur de passage des deux tuyaux dans leur région ondulée.

6. Procédé de raccordement selon la revendication 3, **caractérisé en ce que** la section intérieure du raccordement (1) dans la région du renfoncement (6) en forme de moulure est supérieure ou égale à la section intérieure de passage des deux tuyaux (4, 5) dans leur région ondulée.

7. Procédé de raccordement selon au moins une des revendications précédentes, **caractérisé en ce que** les extrémités cylindriques lisses (2, 3) des tuyaux (4, 5) sont rendues rugueuses avant d'appliquer le produit adhésif (8).

8. Procédé de raccordement selon au moins une des revendications précédentes, **caractérisé en ce que** le raccordement (1) est, à la suite de l'emboîtement mutuel des deux extrémités (2, 3) des tuyaux (4, 5), pourvu de l'extérieur de produit adhésif supplémentaire (7).

9. Procédé de raccordement selon au moins une des revendications précédentes, **caractérisé en ce que** les extrémités (2, 3) des deux tuyaux (4, 5) sont, avant la réalisation du raccordement (1), sectionnées perpendiculairement à l'axe du tuyau.

10. Procédé de raccordement selon au moins une des revendications précédentes, **caractérisé en ce que** les tuyaux (4, 5) sont à ondulations hélicoïdales.

11. Procédé de raccordement selon au moins une des revendications précédentes, **caractérisé en ce que** les tuyaux sont à ondulations annulaires.
